# EUROPEAN PATENT APPLICATION

(11) **EP 1 447 737 A1**
(43) Date of publication of application: **18.08.2004**
(21) Application number: 02751726.7
(22) Date of filing: 26.07.2002
(51) Int. Cl.: G06F 3/033, G01L 5/16, G01L 1/22

(54) **INPUT DEVICE AND ITS MANUFACTURING METHOD**

(30) Priority: 27.07.2001 JP 2001228223
(71) Applicant: K-Tech Devices Corp., Kamiinagun, Nagano 399-4601 (JP)
(72) Inventor: YAJIMA, Hiroshi, Kamiinagun, Nagano 399-4601 (JP); OOBA, Etsuo, Kamiinagun, Nagano 399-4601 (JP); KARASAWA, Fumiaki, Kamiinagun, Nagano 399-4601 (JP); INUKAI, Atsuomi, Kamiinagun, Nagano 399-4601 (JP)
(74) Representative: Becker Kurig Straus
(86) International application number: PCT/JP2002/007611
(87) International publication number: WO 2003/010651

(57) **Abstract**

An input device which enables a constantly favorable matching of both a stress sensor section (10) and a control section (11). To provide this device, the stress sensor section (10) which generates a change in characteristic values of a strain gauge (14) due to stress application to a post (2) arranged on one face of a board (sensor section board (1)) is integrated with the control section (11) which converts the change in characteristic values into data on a direction and intensity of the stress. For example, a resistance element (12) is used for the strain gauge (4) arranged on the sensor section board (1). The control section (11) keeps necessary ICs and electronic components mounted on the face of the control section board (3).

## Description

### Technical Field

The present invention relates to an input device which can be used as pointing devices for personal computers, multidirectional switches for various kinds of electronic devices, and so on, and to a manufacturing method thereof.

### Background Art

An input device used for such a purpose as to move a cursor of a personal computer has a terminal for outputting electric signals from a stress sensor section to a control section as is disclosed in Japanese Patent Laid-open No. 2001-43011. The signals are transmitted from the terminal to the control section through an electric cable.

In the conventional input device mentioned above, the normal operation is realized when the stress sensor section and the control section satisfy the characteristics that they demand from each other. Here, since such characteristics are not uniformly standardized, designers of electronic devices having an input device for personal computers or the like can arbitrarily determine the characteristic values thereof. Therefore, providers of stress sensor sections and control sections are required to provide stress sensor sections and control sections having various characteristics depending on respective electronic devices, types of the electronic devices, and so on. Therefore, it has been very difficult under such circumstances to constantly obtain favorable matching of both the stress sensor sections and the control sections.

Therefore, the problem to be solved by the present invention is to provide an input device which enables constantly favorable matching of both a stress sensor section and a control section.

### Disclosure of the Invention

In order to solve the abovementioned problem, an input device of the present invention is characterized in that it includes: a stress sensor section 10 that generates a change in a characteristic value of a strain gauge 4 due to stress application to a post 2 disposed on one face of a board (sensor section board 1); and a control section 11 that converts the change in the characteristic value into data on a direction and intensity of the stress, and that the stress sensor section 10 and the control section 11 are integrated.

The integrated structure of the stress sensor section 10 with the control section 11 facilitates the confirmation of the matching of both sections before the input device is incorporated into an electronic device. For example, it is possible to select only the input device which exhibits favorable matching as a result of the confirmation and to incorporate it in the electronic device. Therefore, with the above-described structure of the present invention, an input device that enables constantly favorable matching of both the stress sensor section 10 and the control section 11 can be provided.

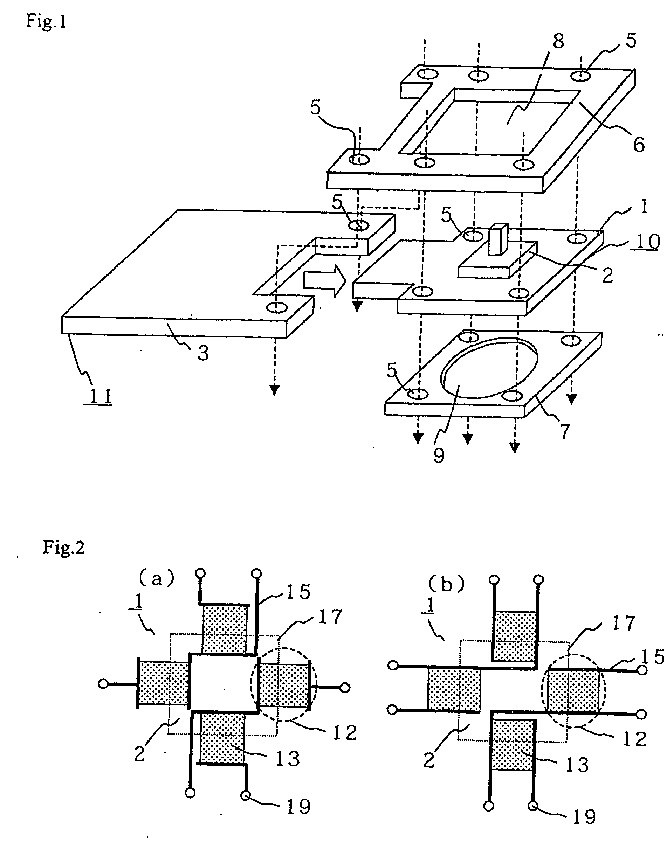

An example of realizing the integration is such that the sensor section board 1 and a control section board 3 are separate boards as shown in Fig. 1, and are fixed together by a connecting member or the like. Alternatively, the stress sensor section board 1 and the control section board 3 may be constituted of the same board to realize the integration.

The former is advantageous in that, when, for example, either one of the sensor section 10 and the control section is in a defective operation state in which a predetermined characteristic is not satisfied, the other one in a good operation state can be effectively used. The latter is advantageous in that the number of parts can be reduced.

Further, in the former case, as the constitution for structurally integrating the sensor section board 1 and the control section board 3, suitable is such a constitution that the sensor section board 1 partly or entirely overlaps the control section board 3 and the overlapping portions are fixed together by a connecting member to realize the integration, or the like. This is because that the adoption of this constitution can restrict the use of excessive connecting members, for example, lead wires and so on. Other examples of the connecting members here are adhesive and solder, and a bolts and nut, screws, and the like which fix the boards together using fixing holes 5 shown in Fig. 1.

As the constitution for electrically connecting the sensor section board 1 and the control section board 3 to each other in the former case, such a constitution can be given as an example that the sensor section 10 partly or entirely overlaps the control section board 3 and the overlapping portions are soldered together. Another possible constitution is such that the overlapping portions are soldered together. Such a constitution is also possible that the overlapping portions overlap each other via illegal conductive material (matter in paste form that is effected, matter in film form, or the like) and the anisotropic conductive material is compressed by the sensor section board 1 and the control section board 3. The use of the anisotropic conductive film is advantageous in that a process of electrically connecting the sensor section board 1 and the control section board 3 to each other can be simplified. Especially when a plurality of connecting terminals are provided, the advantage in the use of the anisotropic conductive material that the connection thereof can be completed only with one application is exhibited, compared with a process of connecting the plural connecting terminals separately.

The aforesaid gauge 4 may be formed on a face of the sensor board 1 or may be formed on a side face or the like of the post 2. In short, it may be formed on either face as long as a mechanism that varies the characteristic values of the strain gauge 4 due to the stress application to the post 2 is imparted. The strain gauge 4 is, for example, a resistance element 12. But the strain gauge 4 is not limited to this and any strain gauge is applicable as long as it has the function of varying the electric characteristics due to the stress application. For example, a chipped resistor in which a thick film or a thin film is formed on a board of alumina or the like, a piezoelectric element such as piezoceramic made of PZT (lead zirconate titanate), and so on are suitably used as the strain gage 4.

Examples of the sensor section 10 of the input device of the present invention are schematically shown in Fig. 2(a) and Fig. 2(b). Resistance elements 12 are arranged at four places on two orthogonal lines whose intersection is positioned at the center of a sensor effective region on the face of the board (sensor section board 1) and which extend along the face of the board, the four places being substantially equally distant from the intersection, the post 2 is fixed to or integrated with the board in such a manner that the center of the sensor effective region on the face of the board and a center of a bottom face of the post 2 substantially coincide with each other, and the stress sensor section that generates a change in resistance values by the expansion/contraction or compression/compression release of the resistance elements 12 due to the stress application to the post 2 is integrated with the control section 11 that converts the change in the resistance values to data on the direction and intensity of the stress. Such a constitution that the direction of the expansion/contraction of the resistance elements 12 is substantially the same as the direction of the electric current flow of the resistance elements 12 (Fig. 2(a)) is generally advantageous in that the change ratio of the resistance values for a given stress, namely, output is large compared with that in the constitution in which these directions are not substantially the same (Fig. 2(b)).

Here, "the post 2 is fixed to the board face" indicates the state in which the post 2 and the board (sensor section board 1) are separate members respectively and they are fixed together by adhesive or the like. "The post 2 is integrated with the board face" indicates the state in which the post 2 and the board are formed by integral molding or the like.

The "center" in the aforesaid expressions, "the center of a sensor effective region" and "the center of a bottom face of the post 2", does not indicate the center point in strict meaning but includes a position deviated from the center point within the range allowing the stress sensor to effectively function.

In the input device of the present invention, it is preferable that the board forming the stress sensor section 10 is composed of a deforming portion and a nondeforming portion, and the strain gauge 4 (including the resistance elements 12) and the post 2 are disposed in the deforming portion and no component of the control section 11 is disposed in the deforming portion.

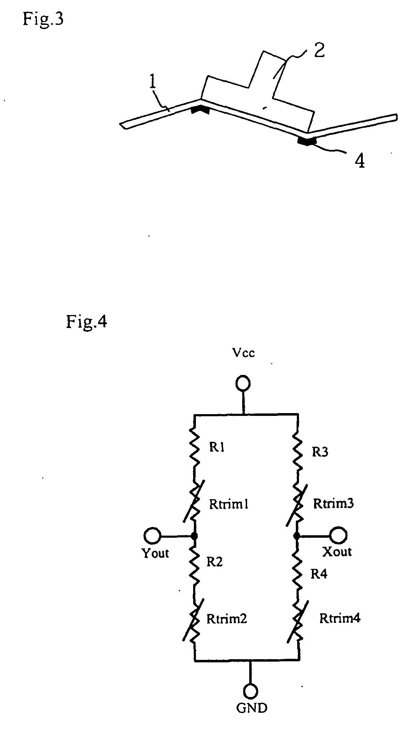

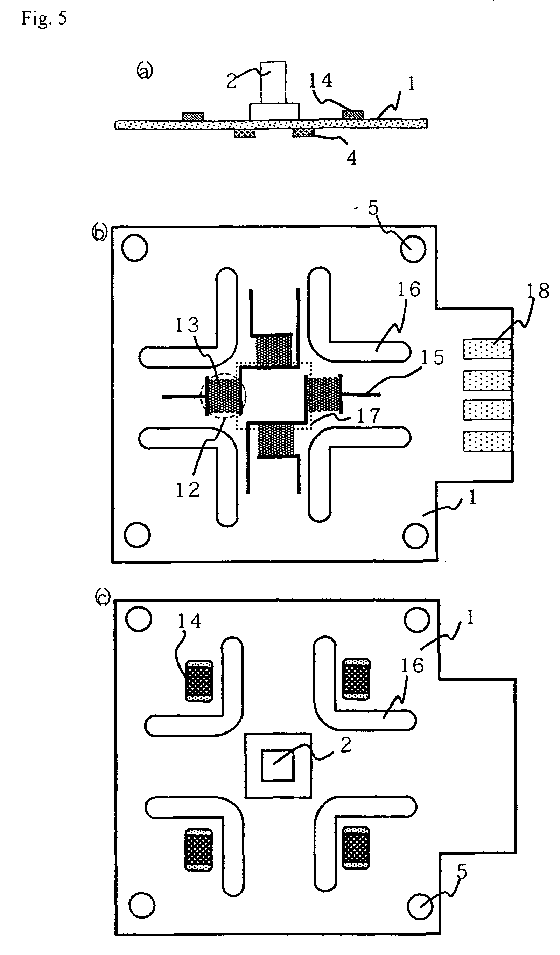

The reason is that this constitution can prevent disadvantages such as that the deflection (deformation) of the sensor section board 1 as shown in Fig. 3 resulting from the use of the stress sensor transmits to the control section board 3 to give stress to electronic components, ICs (integrated circuits), and so on mounted on the face of the control section board 3, thereby causing the deviation of the characteristic values thereof from their intended values and the damage to portions electrically connecting the electronic components, the ICs, and so on to the control section board 3. The nondeforming portion is, for example, a marginal portion of the board 3 in an area outside board holes 16 shown in FIG. 5. This portion hardly deforms even when the stress is applied to the post 2. An area inside the board holes 16 is the deforming portion which deforms when the stress is applied to the post 2 to expand/contract the resistance elements 12.

In the input device of the present invention and the preferable structure based thereon, the board forming the stress sensor section (sensor section board 1) is preferably reinforced by a reinforcing member made of a material higher in rigidity than this board. This is especially effective in cases such as the case when a flexible material, for example, glass-fiber-containing epoxy resin which can be generally used as a material of a printed circuit board, is used for the sensor section board 1. The reason is that such a relatively flexible material easily reaches plastic deformation beyond an elastically deformed region due to excessive stress application to the post 2 and so on. Here, as the material high in rigidity when the glass-fiber-containing epoxy resin is used as the sensor section board 1, for example, a metal material such as aluminum, a ceramic material such as alumina, and so on are suitable.

An example of the reinforcing structure is such that the reinforcing member is constituted of two sheets of board materials (a first reinforcing member 6 and a second reinforcing member 7) or more, which sandwich a marginal portion of the board (sensor section board 1) forming the stress sensor section 10 to reinforce the board as shown in Fig. 1. In the structure of the input device shown in Fig. 1, a hole 8 is formed in the first reinforcing member 6, which allows the first reinforcing member 6 and the second reinforcing member 7 to keep clear of the post 2 and so on in sandwiching the marginal portion of the sensor section board 1. A recession 9 is formed in the second reinforcing member 7 for the same reason, which arrangement is made so as to prevent the strain gauge 4 and so on disposed around a center portion of a bottom face of the sensor section board 1 from being given a stimulus in the aforesaid sandwiched state. The recession 9 also contributes to securing of space for allowing the deflection of the sensor section board 1 when the stress sensor is in the operation state shown in Fig. 3. Further, the recession 9 also contributes to securing of space for allowing the deflection of the sensor section board 1 when a top face of the post is pressed downward (application of the stress in a Z-axis direction) as a usage form of the stress sensor. Here, an example of such a stress sensor usage form that the top face of the post is pressed downward is a form to be applied to a so-called click operation when the stress sensor is used as a pointing device for a personal computer.

Further, in the input device of the present invention and the preferable structure based thereon, it is preferable that the board forming the stress sensor section (sensor section board 1) and the board forming the control section (control section board 3) are separate boards, and the reinforcing member is fixedly coupled to the board forming the control section (control section board 3), as shown in Fig. 1. The reason is that this structure minimizes the transmission of the stress applied to the post 2 to the control section board 3. The fixed coupling of the sensor section board 1 directly to the control section board 3 may possibly cause the characteristic values of the electronic components, the ICs, and so on mounted on the control section 11 to be deviated from the intended range and may possibly damage the portions electrically connecting the electronic components, the ICs, and so on to the control section board 3, as is described above.

In the input device of the present invention using the reinforcing member as shown in Fig. 1, it is also preferable that the reinforcing member is fixed to an electronic device. The reason is, similarly to the above, that consideration is given to providing the structure minimizing the transmission of the stress to the control section board 3.

In the input device of the present invention and the preferable structure based thereon, by such a structure of the input device that the strain gauge 4 used in the sensor section 10 is constituted of the resistance elements 12 and trimmable chip resistors 14 serially connected to the respective resistance elements 12 are disposed in the deforming portion of the board (sensor section board 1 and/or the control section board 3), it is made possible to adjust the resistance values of the respective resistance elements 12 without forming trimming grooves in the resistance elements 12 functioning as the strain gauge 4. When the trimming grooves are formed in resistors of the resistance elements 12 functioning as the strain gauge 4, the breakage of the resistance elements 12 sometimes easily occur starting from a minute crack around the grooves due to the deformation (expansion/contraction or compression/compression release) of the resistance elements 12. Therefore, when the trimming grooves are formed in the trimmable chip resistors 14 which are thus serially connected to the respective resistance elements 12 as the strain gauge 4, such breakage can be prevented. By the formation of the trimming grooves in the trimmable chip resistors 14, the sum totals of the resistance values of the resistance elements 12 and the trimmable resistors 14 serially connected thereto are adjusted to be in a uniform range.

Fig. 4 schematically shows the connection state of the resistance elements 12 and the trimmable chip resistors 14. As is seen in Fig. 4, the resistance elements constitute a bridge circuit. The resistance elements constituting the bridge circuit have to be adjusted to be within a uniform range. Therefore, the resistance values of the trimmable resistors (Rtrim 1 to Rtrim 4) serially connected to the respective resistance elements 12 (R1 to R4) are adjusted so that the total resistance value of R1 and Rtrim1, that of R2 and Rtrim 2, that of R3 and Rtrim 3, and that of R4 and Rtrim 4 become uniform. Then, the control section 11 can carry out arithmetic processing, analysis, and so on of the intensity and direction of the stress applied to the post 2 based on the total resistance values.

Here, the trimmable chip resistors 14 are preferably mounted on a face of the control section board 3. When the trimmable chip resistors 14 are mounted on the sensor section board 1, the sensor section board 1 is bent due to the operation of the sensor section 10 to slightly apply a stress also to the trimmable chip resistors 14, which sometimes results in unstable resistance values thereof. On the other hand, the control section board 3, compared with the sensor section board 1, is not easily applied with a stress even when the sensor section 10 is operated, so that the resistance values of the trimmable chip resistors 14 mounted thereon are stable. Further, when the sensor section board 1 and the control section board 3 are constituted of the same board to realize the integration, this design is also advantageous in that the work of mounting the trimmable chip resistors 14 can be incorporated in the work of mounting electronic components necessary for the control section 11. Moreover, another advantage of mounting the trimmable chip resistors 14 on the sensor section board 1 is that, if it is found that only the sensor section 10 is in defective operation in the case when the sensor section board 1 and the control section board 3 are separate boards, the correction can be easily made. In other words, the correction can be completed only by the replacement of the sensor section 10.

A manufacturing method of an input device of the present invention that can solve the problem stated above is characterized in that it includes: a first step of forming an electric wiring on a face of a board and/or on a layer in the board; a second step of forming a strain gauge 4 on the face of the board (sensor section board 1); a third step of mounting, on the face of the board (control section board 3), an electronic component for a control section 11 necessary for forming the control section 11 that converts a change in a characteristic value of the strain gauge 4 to predetermined data; a fourth step of fixing to the face of the board a post 2 that generates the change in the characteristic value of the strain gauge 4 due to stress application; and a fifth step of integrating, when necessary, the sensor section board 1 on which the strain gauge 4 is formed and the control section board 3 on which the electronic component for the control section is mounted, and that the first step, the second step, and the third step are carried out in this order, the fourth step is carried out on any stage after the second step is finished, and the fifth step is carried out on any stage after the first step is finished.

The board here includes both a board in which the sensor section board 1 and the control section board 3 are constituted of the same board to realize the integration and a board in which the sensor section board 1 and the control section board 3 are separate boards, which are fixed together by a connecting member to realize the integration. The former does not require the fifth step and the latter requires the fifth step.

The input device obtained by this manufacturing method is so structured that the stress sensor section 10 that generates the change in the characteristic value of the strain gauge 4 due to the stress application to the post 2 disposed on one face of the board (sensor section board 1) is integrated with the control section 11 that converts the change in the characteristic value to data on the direction and intensity of the stress. Therefore, for the same reason as the reason stated above, it is possible to provide the input device which enables constantly favorable matching of both the stress sensor section 10 and the control section 11.

A manufacturing method of the aforesaid input device of the present invention includes: a process of obtaining a stress sensor section by carrying out an eleventh step of forming an electric wiring on a face of a stress sensor board 1 and/or on a layer in the board, a twelfth step of forming a strain gauge 4 on the face of the board (sensor section board 1), and a thirteenth step of fixing to the face of the board (sensor section board 1) a post 2 that generates a change in a characteristic value of the strain gauge 4 due to stress application, in this order; a fourteenth step of thereafter checking the operation of the stress sensor section 10; and a fifteenth step of mounting an electronic component for a control section 11 necessary for forming the control section 11, on a face of a control section board 3 that converts the change in the characteristic value of the strain gauge 4 whose characteristic value is changed due to the stress application, to data on a direction and intensity of the stress, thereby obtaining the control section 11, and it is preferable to carry out a sixteenth step of coupling to the control section only the stress sensor section that is recognized as a good product in the fourteenth step.

The board here is a board in which the sensor section board 1 and the control section board 3 are separate boards and both of the boards are fixed together by a connecting member to realize the integration. The stress sensor section 10 that is not recognized as a good product in the fourteenth step is not subjected to the sixteenth step, thereby remarkably lowering a defect occurrence ratio as the entire input device. The criteria for judging a good product or not here is whether or not an output within an intended range is obtainable when predetermined intensity of stress is applied to the post 2 from a predetermined direction. Further, needless to say, only the control section 11 recognized as a good product in a step of checking the operation of the control section 11, which includes a step in which this operation check is carried out before the sixteenth step after the fifteenth step, can be subjected to the sixteenth step. This further lowers the defect occurrence ratio. Here, in relatively many cases compared with the control sections 11, the stress sensor sections 10 are not recognized as good products. The reason is thought to be that the stress sensor section 10 includes a movable member while the control section 11 does not include any movable member.

### Brief Description of Drawings

Fig. 1 is a view showing the assembly state of an input device of the present invention. Fig. 2(a) and Fig. 2(b) are schematic views each showing an essential portion of a sensor section 10 according to the present invention. Fig. 3 is a view showing the operation state of the sensor section 10 according to the present invention. Fig. 4 is a schematic diagram showing an example of the input/output state of electric signals in the input device of the present invention. Fig. 5(a), Fig. 5(b), and Fig. 5(c) are schematic views of the sensor section 10 according to the present invention, Fig. 5(a) showing a side view, Fig. 5(b) showing a bottom view, and Fig. 5(c) showing a top view. Fig. 6 is a chart showing a method of checking the operation of the sensor section 10 according to the present invention. Fig. 7 is a view schematically showing an input device of the present invention.

The reference numerals in these drawings correspond to the following: 1 ···sensor section board, 2···post, 3···control section board, 4··· strain gauge, 5··· fixing hole, 6··· first reinforcing member, 7··· second reinforcing member, 8···hole, 9···recession, 10···sensor section, 11···control section, 12···resistance element, 13···resistor, 14···trimmable chip resistor, 15···conductor, 16···board hole, 17···contour of bottom face of post, 18,··· terminal assembling portion, and 19···terminal.

### Best Mode for Carrying out the Invention

An example where an input device of the present invention is applied to a pointing device of a personal computer will be shown below as an example of an embodiment of the present invention.

First, a manufacturing method of a sensor section 10 will be described with reference to Fig: 5(a), Fig. 5(b), and Fig. 5(c). A double-sided copper-clad laminate is prepared in which copper foils as conductor layers each having a thickness of about 18 µm are disposed on both faces of a laminate with a thickness of 0.8 mm essentially made of glass-fiber-containing epoxy resin. The double-sided copper-clad laminate corresponds to one unit of a sensor section board having a rectangular external shape, the sensor section boards being arranged in lines in large number lengthwise and widthwise, and is patterned in such a manner that a front face and a rear face of the board 3 are patterned so that each one unit of the sensor section board 1 has a circuit pattern (conductors 15) formed thereon and has an electric connection state of resistance elements 13 and trimmable chip resistors 14 as shown in Fig. 4.

In a first step of the patterning, portions required to be conduction channels passing through the front and rear faces of the double-sided copper-clad laminate are perforated. In a second step, conductors are formed on inner walls of through holes made by the perforation, and catalyst-added electroless copper plating and electrolytic copper plating are applied in this order for the purpose of electrical conduction between the copper foils on the front and rear faces. At this time, copper of the plating also adheres onto the copper foils on both faces of the board, so that the total thickness of the coppers on both faces of the board becomes about 50 µ m. In a third step and thereafter, a conductor layer on the surface is partly removed by well-known photo-etching using a dry film resist. The conductors 15 as the remaining portions thereof are obtained. Here, a route from ends of the conductors 15 to a terminal assembling portion 18, which is omitted in Fig. 5(a), Fig. 5(b), and Fig. 5(c), is a route forming a bridge circuit shown in Fig. 4 constituted of resistance elements 12 (R1 to R4) and trimmable chip resistors 14 (Rtrim 1 to Rtrim 4). In the terminal assembling portion 18, terminals (Vcc, GND, Yout, Xout) exist at regular intervals.

Next, notch portions for forming holes 9, fixing holes 5, and the terminal assembling portion 18 shown in Fig. 5(a), Fig. 5(b), and Fig. 5(c) are formed by stamping in each resultant sensor section board 1 as the aforesaid one unit in a large board. The four fixing holes 5 formed in each sensor section board 1 as one unit are formed to be positioned at vertexes of a substantial square, and the intersection of diagonals of the square substantially coincides with the center of a contour 17 of a bottom face of a post which is to be disposed later.

Next, resin-based (carbon resin-based) resistive paste is shaped by screen printing and heated for curing to form resistors 13 as shown in Fig. 5(a), Fig. 5(b), and Fig. 5(c). Further, in order to protect the resistors 13, silicon-based resin paste is screen-printed and thereafter cured to form protective films. Thus, the resistance elements 12 are obtained.

Next, the trimmable chip resistors 14 electrically connected to the respective resistance elements 12 in series by the conductors 15 are arranged by a mounting technique and a reflow technique which are well known in the art so as to realize the connection state as shown in Fig. 4 to the resistance elements 12. The trimmable chip resistors 14 are disposed on a face opposite the face on which the resistance elements 12 are disposed, of the sensor section board 1, as shown in Fig. 5(a), Fig. 5(b), and Fig. 5(c).

Thereafter, in order to adjust the total resistance value of each resistance element 12 and each trimmable chip resistor 14, which are electrically connected to the respective resistance elements 12 in series, to be within a predetermined range, the trimmable chip resistors 14 are laser-trimmed. The reason why the resistors 6 constituting the resistance elements are not directly trimmed is that consideration is given to preventing the resistance values from becoming unstable due to the trimming of the resistors 6 made of resin and the trimming of the sensor section board 1 essentially made of resin on which the resistors 6 are disposed. These resins sometimes exhibit unstable behaviors to very high temperature processing such as laser trimming.

Then, as shown in Fig. 5(a), Fig. 5(b), and Fig. 5(c), a post 2 which is molded out of alumina and whose bottom face has a contour 17 in a square shape is fixed to each one unit of the sensor section board 1 by epoxy-based adhesive so that this bottom face comes in contact with the face of the sensor section board 1 opposite the face on which the resistance elements 12 are disposed and so that the center of this bottom face substantially coincides with the center of each unit of the sensor section board 1. Thus, an aggregate of the stress sensors of the present invention is obtainable.

Next, a disc cutter cuts and divides the large board along a large number of dividing lines (they may be visible lines or invisible lines), which are provided lengthwise and widthwise on the large board, into the units of the sensor section boards 1, and each unit of the sensor section board 1 constitutes the individual stress sensor section 10. Fixing the post 2 before this division as in this example enhances workability. The reason is that the work of attaching the post 2 to each sensor section board 1 having the stress sensor after the large board is divided into the individual stress sensors is complicated since it is inferior in manageability and handlability, compared with the work for the large board.

The stress sensor section 10 is used after being reinforced and fixed by a reinforcing member 6 and a reinforcing member 7, which will be described later, via the fixing holes 5. Then, in the fixed state, a marginal portion of the board 3 outside board holes 16 becomes a nondeforming portion which hardly deforms even when the stress is applied to the post 2, while the area inside the board holes 16 deforms when the stress is applied to the post 2 to become a deforming portion that causes the expansion/contraction of the resistance elements 12. The whole area of the deforming portion becomes a 'sensor effective region' on the face of the sensor section board 1. Since the aforesaid trimmable chip resistors 14 are disposed in the nondeforming portion, they are scarcely given an influence that changes resistance values thereof by the stress applied to the post 2.

Next, a manufacturing method of the control section 11 will be described. First, the aforesaid patterning which is made on the sensor section board 1 is also made on the control section board 3 in the shape shown in Fig. 1 in the same manner. In the control section 11, a predetermined voltage is applied between a voltage applying terminal (Vcc) and (GND) of the bridge circuit shown in Fig. 4, and based on the analysis of the resistance values of the resistance elements 12 (R1, R2) and the trimmable chip resistors 14 (Rtrim 1, Rtrim2) on the left side in the drawing, the function for constituting the stress sensor in the Y-axis direction by a Y terminal (Yout) is demanded, and further based on the analysis of the resistance values of the resistance elements 12 (R3, R4) and the trimmable chip resistors 14 (Rtrim 3, Rtrim 4) on the right side in the drawing, the function for constituting the stress sensor in the X-axis direction is demanded. Further, since all the resistance values of the respective resistance elements 12 (R1 to R4) are increased when the top face of the post is pressed downward (Z-axis direction), the function enabling the detection of this state discriminatingly from the aforesaid stresses in the X-axis direction and the Y-axis direction is also demanded. A so-called control IC satisfying these demands and other electronic components are mounted on the control section board 3, and after the aforesaid reflow process and so on, the control section 11 is obtainable.

Next, the aluminum board material having a thickness of 1.5 mm shown in Fig. 1 is worked to form the fixing holes 5, the hole 8, and other notch portions, thereby obtaining the first reinforcing member 6. Further, an iron plate having a thickness of 0.8 mm is worked to form the fixing holes 5 and the recession 9 having a depth of 40 µ m to 50 µ m, and an exposed face is thereafter zinc-plated, thereby obtaining the second reinforcing member 7.

As shown in Fig. 1, the first reinforcing member 6 is brought into contact with a top face of the sensor section 10 and the second reinforcing member 7 is brought into contact with a bottom face thereof, and then the fixing holes 5 are fastened with screws to fix these three members, thereby reinforcing the sensor section board 1. Further, the other fixing holes 5 in the first reinforcing member 6 and the fixing holes 5 of the control section board 3 are fastened with screws to fix them. After these processes, the input device of the present invention is obtainable.

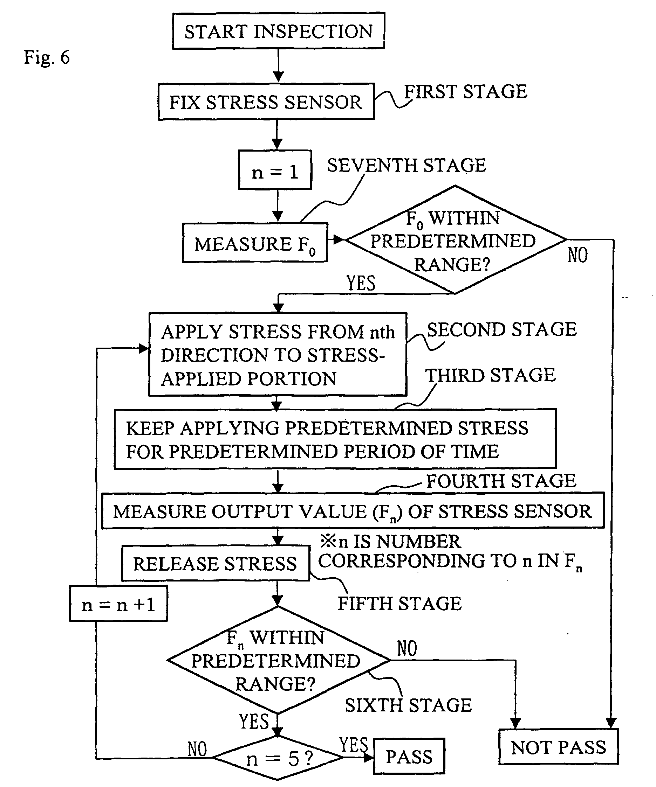

In this example, the operation check of the sensor sections 10 is conducted prior to these fixing works, and only the sensor sections 10 recognized as good products are subjected to the fixing works. Hereinafter, a method of judging good products or not will be explained with reference to Fig. 6.

First, on a first stage, the stress sensor section 10 is fixed so as to be in the same state as the fixed state in use. At the same time, the four terminals on the rear face of the sensor section board 1 are electrically connected to terminals of an inspection pedestal.

Next, on a seventh stage, an output value (F₀) of the stress sensor section 10 in the state in which the stress is not applied to a stress-applied portion is measured, and it is judged whether or not F₀ falls within a predetermined intended range. When the measurement result shows that it does not fall within the predetermined range, rejection judgment is made. When the measurement result shows that the output values (F₀) of all the resistance elements 11 fall within the predetermined range, the procedure proceeds to a second stage.

On the second stage, the stress is applied to the post 2 from an n^{th} direction. When the stress is applied to the stress-applied portion 2 for the first time, the n^{th} direction is a first direction. In this example, the stresses with n = 1 to 4 are applied by the sequential operation of four stress applying devices, which are arranged at intervals of the angle of 90 degrees, for applying the stress to the circumferential face of the post 2. The stress with n= 5 is applied by the operation of a stress applying device that presses the top face of the post 2 downward.

A third stage is a stage where the stress applied on the second stage is kept working as a predetermined stress during a predetermined period of time. In this example, the predetermined period of time is set to one second. A first reason for this is that slight variation is observed in the output values when the predetermined period of time is set to 0.5 second. A second reason is that, even when the predetermined period of time is set to be longer than one second, the output values are equally stable to those when the predetermined period of time is set to one second. The shorter predetermined time is the more advantageous in order to inspect a larger number of the sensor sections 10 in a unit time. For these reasons, the predetermined period of time is set to one second in this example.

A fourth stage is a stage where the output value (Fₙ) of the sensor section 10 is measured. Here, n in Fₙ is the number corresponding to n on the second stage. For example, the output value of the sensor section 10 when the stress from the first direction is applied on the second stage is F₁. The measurement of Fₙ is carried out in substantially the same manner as that for the measurement of F₀.

A fifth stage is a stage where the applied stress is released.

A sixth stage is a stage where it is judged whether or not the output value (Fₙ) falls within the predetermined range. When the output value (Fₙ) falls outside the predetermined range, it is judged that the product does not pass the inspection. The second stage to the sixth stage are repeated until n = 5, and when all the output values fall within the predetermined range, the product is judged to pass the inspection.

In this example, the sensor section board is made of the glass-fiber-containing epoxy resin, but when it is made of ceramic such as alumina instead, the use of a large board in which a large number of dividing grooves are formed lengthwise and widthwise in advance is preferable. The reason is that the dividing work is easily conducted by applying a force by hands or the like so as to open the dividing grooves without using a disc cutter.

By imparting some function to the stress application in a downward direction (Z direction) in the sensor section 10 as in this example, multifunction can be realized. For example, when the sensor section 10 is used as a pointing device of a computer as in this example, it is possible to use the downward stress application as a signal of so-called mouse clicking. Further, when the sensor section 10 is used as, for example, a multifunctional, multidirectional switch for a small portable device such as a so-called cellular phone, it is possible to use the downward stress application for a predetermined period of time as a power-supply on-off command of the portable device, and so on.

Whether to use the trimmable chip resistors 14 or not is to be judged depending on the materials of the portions constituting the resistance elements 12 and the material of the board 3. For example, when the material of the sensor section board 1 is ceramic and the material of the resistors 13 is metal glaze, even if the resistors 13 constituting the resistance elements 12 are directly laser-trimmed, a disadvantage such as unstable resistance values thereafter is only a negligible level. Therefore, it is not necessary to use the trimmable chip resistors 14 in such a case. However, when other causes and so on necessitate the use of the trimmable chip resistors 14, it is needless to say that the trimmable chip resistors 14 have to be used as required.

For example, in such a structure having the resistors 13 made of a mixture of a carbon-based conductive material and resin, which are formed on the board 1 constituted of a compact made of the glass-fiber-containing epoxy resin, when the resistors 13 are directly laser-trimmed, a laser output is adjusted to an appropriate value to prevent the resin-based materials forming the board 1 and the resistors 13 from suffering excessive damage to impair stability of the resistance values (including the stability when the stress sensor is in use). Since such a structure allows the trimmable chip resistors 14 in this example (Fig. 5(a), Fig. 5(b), and Fig. 5(c)) to be omitted, it is extremely preferable in view of the reduction in the number of parts and the number of manufacturing man-hours.

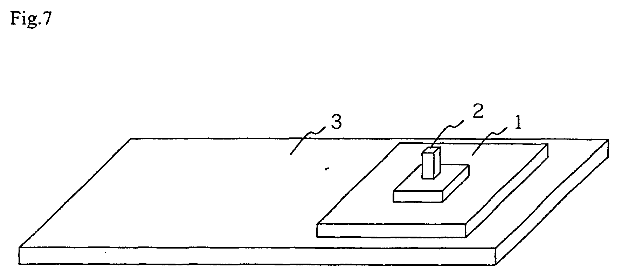

Another embodiment of the present invention is shown in Fig. 7. This is an example of an input device in which a sensor section board 1 entirely overlaps a control section board 3 and the overlapping portions are fixed together to realize integration. A fixing member suitably used here is solder, adhesive or the like. The materials of the sensor section board 1 and a control section board 3 are glass-fiber-containing epoxy resin or the like. The input device in this form is superior in that the total thickness of the input device can be reduced compared with the input device shown in Fig. 1. On the other hand, it is slightly disadvantageous in that the stress applied to a post 2 easily transmits to the sensor section board 1 and the control section board 3. This small disadvantage can be overcome by reinforcing means such as pasting a thin metal plate on a bottom face of the control section board 3, by means such as bringing most of the bottom face of the control section board 3 into contact with a casing of an electronic device in which this input device is incorporated and reinforcing the entire input device by this casing, or by other means, and therefore, this disadvantage is not thought to be a very significant problem.

### Industrial Availability

The present invention has made it possible to provide an input device which enables constantly favorable matching of both a stress sensor section and a control section.

## Claims

1. An input device comprising: a stress sensor section that generates a change in a characteristic value of a strain gauge due to stress application to a post disposed on one face of a board; and a control section that converts the change in the characteristic value into data on a direction and intensity of the stress, wherein the stress sensor section is integrated with the control section.

2. An input device according to claim 1, wherein the strain gauge is a resistance element.

3. An input device, wherein resistance elements are arranged at four places on two orthogonal lines whose intersection is positioned at a center of a sensor effective region on a face of a board and which extend along the face of the board, the four places being substantially equally distant from the intersection, a post is fixed to or integrated with the board in such a manner that the center of the sensor effective region on the face of the board and a center of a bottom face of the post substantially coincide with each other, and a stress sensor section that generates a change in resistance values by the expansion/contraction or compression/compression release of the resistance elements due to stress application to the post is integrated with a control section that converts the change in the resistance values to data on a direction and intensity of the stress.

4. An input device according to any one of claim 1 to claim 3, wherein the board forming the stress sensor section is composed of a deforming portion and a nondeforming portion, and the strain gauge (including the resistance elements) and the post are disposed in the deforming portion and no component of the control section is disposed in the deforming portion.

5. An input device according to any one of claim 1 to claim 4, wherein the board forming the stress sensor section and a board forming the control section are constituted of a same board to realize the integration.

6. An input device according to any one of claim 1 to claim 4, wherein the board forming the stress sensor section and a board forming the control section are separate boards, and both boards are fixed together by a connecting member to realize the integration.

7. An input device according to claim 6, wherein the connection member includes solder, and the solder also contributes to electrical connection between the stress sensor section and the control section.

8. An input device according to claim 6 or claim 7, wherein the board forming the stress sensor section partly or entirely overlaps the board forming the control section, and the overlapping portions are fixed together to realize the integration.

9. An input device according to any one of claim 6 to claim 8, wherein the board forming the stress sensor section is reinforced by a reinforcing member made of a material higher in rigidity than the board forming the stress sensor section.

10. An input device according to claim 9, wherein the reinforcing member is constituted of two sheets of board materials or more, and the board materials sandwich a marginal portion of the board forming the stress sensor section to reinforce the board forming the stress sensor.

11. An input device according to claim 9 or claim 10, wherein the board forming the stress sensor section and the board forming the control section are separate boards, and the reinforcing member is fixedly coupled to the board forming the control section.

12. An input device according to any one of claim 9 to claim 11, wherein the reinforcing member is fixed to an electronic device.

13. An input device according to claim 4, wherein trimmable chip resistors serially connected to the respective resistance elements are disposed in the deforming portion of the board.

14. An input device according to any one of claim 2 to claim 13, wherein the trimmable chip resistors serially connected to the respective resistance elements are disposed in the control section.

15. A manufacturing method of an input device, comprising: a first step of forming an electric wiring on a face of a board and/or on a layer in the board; a second step of forming a strain gauge on the face of the board; a third step of mounting, on the face of the board, an electronic component for a control section necessary for forming the control section that converts a change in a characteristic value of the strain gauge to predetermined data; a fourth step of fixing to the face of the board a post that generates the change in the characteristic value of the strain gauge due to stress application; and a fifth step of integrating, when necessary, the board on which the strain gauge is formed and the board on which the electronic component for the control section is mounted, wherein the first step, the second step, and the third step are carried out in this order, the fourth step is carried out on any stage after the second step is finished, and the fifth step is carried out on any stage after the first step is finished.

16. A manufacturing method of an input device, comprising:
a process of obtaining a stress sensor section by carrying out an eleventh step of forming an electric wiring on a face of a stress sensor board and/or on a layer in the board, a twelfth step of forming a strain gauge on the face of the board, and a thirteenth step of fixing to the face of the board a post that generates a change in a characteristic value of the strain gauge due to stress application, in this order; a fourteenth step of thereafter checking the operation of the stress sensor section;
a fifteenth step of mounting an electronic component for a control section necessary for forming the control section, on a face of a control section board that converts the change in the characteristic value of the strain gauge whose characteristic value is changed due to the stress application, to data on a direction and intensity of the stress, thereby obtaining the control section; and
a sixteenth step of coupling to the control section only the stress sensor section that is recognized as a good product in the fourteenth step.
